# EUROPÄISCHE PATENTSCHRIFT

(11) **EP 1 626 838 B1**
(45) Veröffentlichungstag und Bekanntmachung des Hinweises auf die Patenterteilung: **11.10.2006**
(21) Anmeldenummer: 04728795.8
(22) Anmeldetag: 22.04.2004
(51) Int. Cl.: B24B 33/02, B24B 31/116, B24B 57/00, B24B 37/02, C09K 3/14, C09G 1/02

(54) **FREILEGEMASSE, FREILEGEVERFAHREN UND FREILEGEVORRICHTUNG**
EXPOSING SUBSTANCE, EXPOSING METHOD, AND EXPOSING DEVICE
MASSE D'ABRASION, PROCEDE D'ABRASION ET DISPOSITIF D'ABRASION

(30) Priorität: 24.05.2003 DE 10323743
(43) Veröffentlichungstag der Anmeldung: 22.02.2006
(73) Patentinhaber: DaimlerChrysler AG, 70567 Stuttgart (DE)
(72) Erfinder: SCHÄFER, Helmut, 71394 Kernen (DE); STOCKER, Peter, 71560 Sulzbach (DE); STORZ, Oliver, Mahwah, NJ 07430 (US)
(86) Internationale Anmeldenummer: PCT/EP2004/004269
(87) Internationale Veröffentlichungsnummer: WO 2004/103640

(56) Entgegenhaltungen:
- WO-A-90/05044
- DE-A- 2 531 182
- DE-A- 3 314 789
- DE-A- 4 438 550
- DE-A- 19 627 926
- DE-C- 10 119 337
- US-A- 3 521 412
- "Überholung von Aluminium-Motoren" 1999, MOTOR SERVICE INTERNATIONAL KOLBENSCHMIDT PIERBURG , XP002299579 Seite 8, Absatz 2.5; Abbildungen 8,9

## Beschreibung

Die Erfindung betrifft eine Freilegemasse, ein Freilegeverfahren und eine Freilegevorrichtung, insbesondere zur Freilegung von Oberflächen, wie etwa Zylinderlaufbahnen, aus Material mit ausgeprägten Si-Primärkristallen.

Freilegemasse gemäß dem Oberbegriff des Patenstanspruchs 1 ist beispielsweise aus der Druckschrift DE 3 314 789 A1 bekannt.

Im Fahrzeugbau kommen in heutiger Zeit verstärkt Materialen zum Einsatz, welche aufgrund verbesserter Materialeigenschaften wesentlich verlängerte Lebensdauern der aus solchen Materialien ausgeführten Komponenten erlauben und dennoch möglichst leichtgewichtige Komponenten realisierbar machen. So kommen heute beispielsweise im Motorenbau verstärkt leichtgewichtige Aluminium-Materialien zum Einsatz, wobei diese Aluminium-Materialien Zusätze enthalten, um beispielsweise Zylinderbohrungs-Oberflächen in Kurbelgehäusen aus solchen Aluminium-Materialien möglichst verschleißfrei ausführen zu können, was bei einer Verwendung von reinem Aluminium aufgrund seiner relativen Weichheit nicht möglich wäre. Bevorzugt verwendete Materialien für solche Oberflächen von Zylinderbohrungen bzw. Zylinderlaufbahnen sind beispielsweise unter den Bezeichnungen Locasil, Silitec, SAE 390 oder als übereutektisches Aluminium bekannt. Solche Materialien können in das Aluminium-Material eingebettete ausgeprägte Si-Primärkristalle aufweisen, welche die nötige Festigkeit dieser Materialien sicherstellen können.

Wie auch bei Verwendung herkömmlicher Grauguss-Materialien ist es auch bei Verwendung dieser oben genannten modernen Materialien mit ausgeprägten Si-Primärkristallen erforderlich, die Oberflächen der aus solchen Materialien gebildeten Zylinderlaufbahnen in einem abschließenden Bearbeitungsschritt fein zu bearbeiten, um insbesondere Riefenbildung im Betrieb verhindern zu können. Speziell im Fall herkömmlicher Materialien, wie zum Beispiel Grauguss, ist eine solchen Feinbearbeitungen als Honen und/oder Läppen bekannt. Im Fall moderner Materialien mit ausgeprägten Si-Primärkristallen, welche in Aluminium eingebettet sind, ist es erforderlich, diese Si-Primärkristalle mechanisch, chemisch bzw. mittels wässriger Lösungen aus dem Aluminium, in welches sie eingebettet sind, freizulegen, um eine möglichst belastbare Zylinderlaufbahn-Oberfläche vorzusehen.

Bekannt ist beispielsweise ein mechanisches Freilegen der Si-Primärkristalle mittels eines gebundenen Honsteins, wobei durch die Bewegung des Honsteins über die Zylinderlaufbahn-Oberfläche die Si-Primärkristalle des Materials zusätzlich verrundet werden, was zu einem sanften Einlauf von Kolbenringen auf solchermaßen bearbeiteten Zylinderbahnen aus Aluminium-Material mit ausgeprägten Si-Primärkristallen führt. Allerdings ist die Aufnahmefähigkeit von weichem Aluminium in den großporig porösen Freilege-Honstein sehr begrenzt. Bereits nach geringer Standzeit des entsprechenden Werkzeugs setzt sich dieser Freilege-Honstein an der Oberfläche mit weichem Aluminium zu, wodurch die Poren des Freilege-Honsteins verschmiert bzw. verstopft werden. Da es dadurch auch zu keiner Selbstschärfung des Freilege-Honsteins mehr kommt, wird bei weiterer Verwendung des Freilege-Honsteins über die eigentliche Standzeit des Werkzeugs hinaus weiches Aluminium über die gesamte zu bearbeitende bzw. freizulegende Zylinderlauffläche verschmiert, was eine Schädigung der Lauffläche in Form von Riefen und Ausfressungen ergibt. Lange Standzeiten, wie sie bei einer Großserienfertigung von Zylinderbohrungen erforderlich sind, können bei Verwendung eines solchen bekannten Freilege-Honsteins zum Freilegen von Materialien mit Si-Primärkristallen bei Kristallgrößen von 4 bis 8 µm nicht effektiv verwendet werden.

Allgemein bekannt und heute Serienstandard ist ein sogenanntes wässriges Freilegen der Si-Primärkristalle der Oberfläche mit Natronlauge. Dabei werden allerdings die so freigelegten Si-Primärkristalle nicht verrundet und bleiben somit im Wesentlichen scharfkantig, was ein ähnlich sanftes Einlaufen von Kolbenringen auf entsprechenden Zylinderbahnen mit ausgeprägten Si-Primärkristallen, wie es durch das vorher beschriebene mechanische Freilegen der entsprechenden Si-Primärkristalle ermöglicht wird, nicht zulässt.

Auch ein im Kundendienstbereich bekanntes sogenanntes Sunnen-Freilegen, bei welchem eine Läpp-Paste die Freilegung vornimmt, ist an sich bekannt.

Beide letztgenannten Lösungen sind jedoch für die Großserienfertigung aufgrund der hohen Kosten nicht wirtschaftlich, und/oder sie besitzen den Nachteil, dass SiC-Partikel verschleppt werden, welche dann beispielsweise nicht oder nur schlecht aus dem entstehenden Abwasser herausgefiltert werden können und insbesondere im Bereich der Laufbahnen den Verschleiß erhöhen können.

Als Freilege-Materialien kommen zum jetzigen Zeitpunkt bereits Siliziumkarbidkörner zum Einsatz, wobei jedoch lediglich äußerst grobkörnige Partikel mit Partikelgrößen über 5 µm in Läpp-Pasten auf Ölbasis Verwendung finden.

Es ist daher die Aufgabe der vorliegenden Erfindung, eine Freilegemasse, ein Freilegeverfahren und eine Freilegevorrichtung vorzusehen, mit welcher/welchem eine möglichst hohe Prozesssicherheit unter Großserienbedingungen bei gleichzeitig geringem Fertigungsaufwand ermöglicht wird, wobei gleichzeitig eine Kantenverrundung der freizulegenden Si-Primärkristalle des zu bearbeitenden Materials erfolgt und die abgetragenen bzw. zertrümmerten Teile der Si-Primärkristalle hundertprozentig von der bearbeiteten Oberfläche entfernt werden können, und wobei eine verbesserte Rest-Grundrauheit der bearbeiteten Oberfläche zur Verbesserung von Ölhaft- und Leichtlaufeigenschaften auf solchen Oberflächen gegeben ist.

Die Aufgabe der vorliegenden Erfindung wird gelöst durch eine erfindungsgemäße Freilegemasse gemäß Anspruch 1, ein erfindungsgemäßes Verfahren gemäß Anspruch 10 und eine erfindungsgemäße Vorrichtung gemäß Anspruch 13.

Bevorzugte Ausführungsformen der Erfindung sind in den jeweiligen Unteransprüchen definiert.

Die erfindungsgemäße Freilegemasse, insbesondere zur Freilegung von Zylinderlaufbahnen aus Material mit ausgeprägten Si-Primärkristallen, weist erfindungsgemäß ein Freilegematerial auf, welches in eine zäh-elastische Kunststoffträgermasse eingebettet ist. Durch eine solche Einbettung in eine zäh-elastische Kunststoffträgermasse ist einerseits eine gute Freilegewirkung unter Großserienbedingungen möglich, und andererseits können die freigelegten und teilweise abgetragenen Si-Primärkristalle bzw. Teile dieser Si-Primärkristalle auf einfache Weise zu hundert Prozent aus dem Bereich der zu bearbeitenden Oberfläche, das heißt insbesondere aus dem Bereich der freizulegenden Zylinderlaufbahn, entfernt werden.

Die erfindungsgemäße Freilegemasse enthält organische Beimengungen aus Zellulose, bevorzugt aus Holz- und/oder Sisalfasern, mit bis zu 60 vol.% der Freilegemasse. Diese Beimengungen können zum einen besonders gut lose Aluminium-Mikrospäne binden, aufgrund ihrer verästelten Oberfläche eine verbesserte Aluminiumablagerung an der Freilegemasse erzielen, somit das Aufnahmevermögen der Freilegemasse für Aluminium und eventuell vorhandene Ölreste der vorigen Bearbeitungsschritte erhöhen, und sie bieten darüber hinaus die Möglichkeit, dass sie mit Waschwasser ausgeschwemmt werden können.

Bevorzugt besteht das erfindungsgemäße Freilegematerial aus Siliziumkarbidkörnern, welche eine Korngröße im Bereich von 4 µm bis 1 µm aufweisen. Dabei können diese Korngrößen bevorzugt nur geringfügig um einen gegebenen Mittelwert verteilte Größenverteilungen aufweisen. Durch die erfindungsgemäße Auswahl von Siliziumkarbidkörnern mit einer relativ geringen Korngröße im erfindungsgemäßen Bereich gelingt es auf besonders einfache Art und Weise, zwischen den Si-Primärkristallen der entsprechenden Kristallstruktur, welche freigelegt werden sollen, und welche im Mittel eine Partikelgröße von 8 µm aufweisen, die weiche Aluminiummatrix herauszulösen und die weichen Aluminiumhäute abzutragen, die sich über den harten, verschleißbeständigen Si-Primärkristallen der freizulegenden Materialien befinden.

Bevorzugt können anstelle oder zusammen mit den Siliziumkarbidkörnern gemäß der Erfindung in einer besonders bevorzugten Ausführungsform der Erfindung auch Keramikfasern als Freilegematerial Verwendung finden, wobei diese Keramikfasern besonders bevorzugt aus Al₂O₃ bestehen können. Solche Fasern zeigen in der erfindungsgemäß vorgesehenen zäh-elastischen Kunststoffträgermasse der Freilegemasse eine besonders gute Haftung.

Gemäß einer weiteren bevorzugten Ausführungsform der Erfindung können auch organische Binder mit bis zu 40 vol.% der Freilegemasse enthalten sein, wobei diese organischen Binder besonders bevorzugt in Form von Naturwachsen vorgesehen sein können. Ferner kann die erfindungsgemäße Freilegemasse bevorzugt Beimengungen von Stärkemehlen von bis zu 20 vol.% der Freilegemasse enthalten und/oder Beimengungen von natürlichen tierischen und/oder pflanzlichen Fetten mit bis zu 40 vol.% der Freilegemasse enthalten. Auch Beimengungen von Harzen mit bis zu 20 vol.% der Freilegemasse können gemäß einer bevorzugten Ausführungsform der erfindungsgemäßen Freilegemasse enthalten sein.

Die oben genannten Beimengungen können beispielsweise bei höheren Temperaturen in einem Auswaschprozess ausfallen bzw. ausflocken, sodass sie recycelbar sind. Gleichzeitig können die oben genannten Beimengungen dazu dienen, die Freilegemasse klebrig zu vernetzen. Ferner können die obigen Beimengungen dazu beitragen, dass die erfindungsgemäße Freilegemasse in Prozessen verwendbar ist, bei welchen die zu bearbeitende Oberfläche noch durch Ölverschmutzung aufgrund vorangegangener Bearbeitungsschritte verschmutzt ist und trotzdem eine Freilegung ohne vorherigen Waschschritt ermöglichen, was die Verarbeitungseigenschaften insbesondere in einem Großserien-Einsatz einer solchen erfindungsgemäßen Freilegemasse weiter erhöhen kann. Ferner können die oben genannten Beimengungen die Zähigkeit der Freilegemasse zusätzlich erhöhen und ihr eventuell weitere pastöse Eigenschaften verleihen, wodurch auch die hundertprozentige Entfernung eventuell abgetragener Si-Primärkristalle oder von Teilen solcher Si-Primärkristalle weiter verbessert werden kann.

Es sei angemerkt, dass als zäh-elastische Kunststoffträgermasse der erfindungsgemäßen Freilegemasse unter Berücksichtigung des jeweiligen speziellen Großserien-Einsatzes und unter Berücksichtigung des Materials der freizulegenden Oberfläche jedes entsprechend geeignete zäh-elastische Kunststoffträgermassen-Material Verwendung finden kann.

Besonders bevorzugt ist eine Ausführungsform der erfindungsgemäßen Freilegemasse, welche recycelbar ausgeführt ist. Eine Recycelbarkeit kann sich beispielsweise entsprechend den weiter unten aufgeführten Recyclingschritten, wie sie im Zusammenhang mit dem erfindungsgemäßen Verfahren beschrieben werden, in vorteilhafter Weise ergeben.

Das erfindungsgemäße Verfahren zur Oberflächenbearbeitung eines Werkstücks, insbesondere zur Freilegung von Zylinderlaufbahnen aus Material mit ausgeprägten Si-Primärkristallen, umfasst die folgenden Schritte:
Schruppen des Werkstücks, insbesondere eine Zylinderlaufbahn,
Feindrehen des Werkstücks,
Freilegen unter Verwendung der erfindungsgemäßen Freilegemasse.

Das üblicherweise Honen der Zylinderbohrungen entfällt, wobei eine hohe Wirtschaftlichkeit erzielt wird.

Durch das erfindungsgemäße Freilegeverfahren werden insbesondere bessere bzw. gezielte Rest-Grundrauheiten der zu bearbeiteten Oberflächen erzielt, wodurch aufgrund der Riefenvertiefung nach der Feindrehbearbeitung durch das zähelastische Freilegen höhere Reserven an Ölfilmen, welche an der durch das erfindungsgemäße Verfahren bearbeiteten Oberfläche haften können, erzielt werden und damit verbesserte Laufeigenschaften. Ebenso werden gezielt in einem unteren Zylinderlaufbahnbereich, der nicht von den Kolbenringen, jedoch vom Kolbenhemd berührt wird, neue Laufeigenschaften implementiert. Diese Laufeigenschaften werden durch gezielte Einstellung des Ölrückhaltevolumen über die Oberflächenrauheit bzw. höheren Riefentiefen ermöglicht.

Durch Schaffung neuer Kreuzwechseldrallstrukturen mit sanften, oberflächenverrundeter Mikroölkanäle werden reibungsarme Laufflächen mit hohen Notlaufeigenschaften und größeren Schmierfilmreserven, insbesondere bei Verwendung von Leichtlaufölen, ermöglicht.

Kreuzkanäle die im Gegensatz dazu durch das Fertighonen erzeugt werden, vornehmlich durch die Verwendung eines stationär zerspanendes Schneidkorn (welches Bestandteil der Honleiste ist) und ferner unter Anwendung definierte, spiralförmige Bewegungen durch Steuerung der Drehzahl und der Hubumkehr der Honahle, weisen in der Regel geradlinige Oberflächenmuster/Riefenstrukturen auf.

Durch das erfindungsgemäße zäh-elastische Freilegen werden unterschiedliche, nichtstationäre Verhältnisse unterschiedliche Abtragcharakteristiken an der Oberfläche erzeugt, worduch hingegen eine wellenförmige Fließstrukturen geschaffen wird.

Durch das erfindungsgemäße Freilegeverfahren können auch die Riefen, welche durch die vorhergehende Drehbearbeitung entstanden waren, nivelliert und reduziert werden, was ebenfalls zu verbesserten Laufeigenschaften auf so bearbeiteten Oberflächen führt. Aufgrund der relativ einfachen Anwendbarkeit des erfindungsgemäßen Verfahrens mit seiner reduzierten Anzahl an Verfahrensschritten ist außerdem eine besonders hohe Prozesssicherheit unter Großserienbedingungen bei gleichzeitig geringem Fertigungsaufwand möglich.

Besonders bevorzugt ist eine Ausführungsform des erfindungsgemäßen Verfahrens, bei welcher der Schritt des Freilegens in zumindest zwei oder mehrere Freilegeschritte mit Verwendung unterschiedlicher Freilegemassen unterteilt ist. Dabei können beispielsweise zunächst durch eine etwas grobkörnigere Freilegemasse die Rauheiten der zu bearbeitenden Oberflächen reduziert werden, wobei die zu bearbeitenden Oberflächen makroskopisch geglättet werden, im Anschluss daran kann dann eine Verbesserung der Rauheit der bearbeiteten Oberfläche durch Verwendung einer weiteren, etwas feinkörnigeren Freilegemasse vorgenommen werden, wobei Rauheiten einstellbar sind, welche in einem Bereich oberhalb von 0,1 µm liegen, da im Bereich von Rauheiten unter 0,1 µm ein potenzielles Risiko eines Ölfilmrisses bei Verwendung von Leichtlaufölen als Schmiermittel auf einer entsprechend bearbeiteten Oberfläche besteht. Durch mehrere aufeinanderfolgende Freilegeschritte kann das Risiko eines solchen Ölfilmrisses durch Steuerung der entsprechenden Produktionsparameter bei der Freilegung vermieden werden, wodurch eine verbesserte Rest-Grundrauheit des durch das erfindungsgemäße Verfahren bearbeiteten Materials bzw. dessen Oberfläche gegeben ist. Durch unterschiedliche Dosierung und Konditionierung der Freilegemasse ist es möglich, die o.g. Einzelschritte in einer einzigen Bearbeitungsstation zusammenzufassen.

Besonders bevorzugt ist eine Ausführungsform des erfindungsgemäßen Verfahrens, bei welcher ein Recyclingschritt vorgesehen ist, wobei nach Durchführung des Freilegens durch eine wässrige Aufbereitung der verbrauchten Freilegemasse bzw. - bei Durchführung des Freilegens in mehreren Schritten - der verbrauchten Freilegemassen ein Recycling dieser Freilegemasse(n) durch Zusatz von Natronlauge dazu und durch Abscheidung und Siebung eine Trennung der Bestandteile der Freilegemasse(n) erfolgt, bevorzugt die Trennung von Zellulose-Bestandteilen, Fetten und leichten schwimmenden Bestandteilen und des schwereren Freilegematerials.

Besonders bevorzugt erfolgt die wässrige Aufbereitung durch Zusatz von 4,5%-iger Natronlauge zu der verbrauchten Freilegemasse bzw. den verbrauchten Freilegemassen sowie eine Trocknung und anschließende Kompostierung der Zellulose-Bestandteile. Fette und leicht schwimmende Bestandteile können abgeschöpft und rückgeführt werden. Die schweren Siliziumkarbid-Bestandteile, welche bevorzugt das Freilegematerial bilden, werden sich am Boden eines vorgesehenen Abscheidebeckens absetzen und können dann gezielt dem Becken entnommen werden und nach einer Aufbereitung, Siebung und Rückführung für eine neue Freilegemasse Verwendung finden. Eventuell vorhandene Schwebepartikel in der wässrig aufbereiteten verbrauchten Freilegemasse können über herkömmliche Filtertechnik aus dem Prozess des Herstellungsverfahrens entfernt werden. Das aufgrund des Zusatzes von Natronlauge leicht basische Prozesswasser der wässrigen Aufbereitung kann darüber hinaus gezielt eventuell weiteren vorhandenen sauren Industrieabwässern zur Neutralisierung zugeführt werden, wodurch die Umweltverträglichkeit des erfindungsgemäßen Verfahrens weiter verbesserbar ist.

Die erfindungsgemäße Vorrichtung zur Oberflächenbearbeitung, insbesondere zur Freilegung von Zylinderlaufbahnen aus Material mit ausgeprägten Si-Primärkristallen, zur Durchführung eines erfindungsgemäßen Verfahrens, weist die folgenden Komponenten auf:
Die erfindungsgemäße Freilegemasse,
eine Spindel,
zumindest einen rotierenden Freilegedorn,
zumindest eine Vorratskammer zur Aufnahme von Freilegemasse,
steuerbare elastische Flachschieber, welche an die Kontur des zu bearbeitenden Werkstücks anpassbar sind,
zumindest eine schraubenlinienförmige Drallstufe zur Zufuhr der Freilegemasse,
ein Kreislaufsystem einer Pumpeneinheit zur Förderung der Freilegemasse aus der zumindest einen Vorratskammer in den zumindest einen rotierenden Freilegedorn und mit zumindest einem Rückführkanal in dem zumindest einen Freilegedorn für die Rückführung der verbrauchten Freilegemasse und mit zumindest einem Auffangbehälter für die rückgeführte verbrauchte Freilegemasse.

Die steuerbaren elastischen Flachschieber der erfindungsgemäßen Freilegevorrichtung können vorzugsweise aus Fluor-Kautschuk bestehen, wobei sich durch die steuerbaren elastischen Flachschieber eine Anpassbarkeit der erfindungsgemäßen Vorrichtung an verschiedenen Innendurchmesser / Hubräume von zu bearbeitenden freizulegenden Zylinderoberflächen ergibt. Die schraubenlinienförmige Drallstufe zur Zufuhr der Freilegemasse kann auch eine nutähnliche Vertiefung aufweisen und gewindeähnlich ausgestaltet sein. Die Pumpeneinheit des Kreislaufsystems der erfindungsgemäßen Freilegevorrichtung dient zur Förderung der Freilegemasse durch das Kreislaufsystem aus dem Vorratsbehälter und Überführung in den rotierenden Freilegedorn zur Erzeugung eines Vordruckes sowie der Förderung der verbrauchten Freilegemasse in dem zumindest einen Rückführkanal sowie der Überführung der verbrauchten Freilegemasse in den Auffangbehälter.

Die erfindungsgemäße Vorrichtung zur Freilegung bietet zum einen eine erhöhte Prozesssicherheit des Freilegevorgangs unter Großserienbedingungen, da sie recht einfach ausgeführt werden kann, gleichzeitig bietet sie eine hundertprozentige Entfernung der Materialien, welche bei dem Freilegevorgang anfallen, wodurch eine besonders gute Oberflächenbearbeitung erzielt werden kann, was auch zu einer besseren Rest-Grundrauheit der bearbeiteten Oberflächen führt.

Gemäß einer bevorzugten Ausführungsform der erfindungsgemäßen Vorrichtung weist diese einen Hohlzylinder auf, welcher in das Kreislaufsystem integriert ist, und der so steuerbar ist, dass er die Freilegemasse, welche sich zwischen dem Hohlzylinder und der freizulegenden Oberfläche eines zu bearbeitenden Werkstücks befindet, mit einem steuerbaren Vorspanndruck auf die freizulegende Oberfläche des zu bearbeitenden Werkstücks, insbesondere die Innenwand eines Zylinders, drückt, wobei der Hohlzylinder bevorzugt zumindest einen weiteren Rückführkanal zur Rückführung der verbrauchten Freilegemasse aufweist.

Besonders bevorzugt ist eine Ausführungsform der erfindungsgemäßen Vorrichtung, bei welcher die Freilegemasse entlang einer vorgegebenen Bearbeitungsrichtung des Werkstücks, insbesondere entlang der Längsrichtung einer Zylinderbohrung eines zu bearbeitenden Zylinders, bevorzugt durch Kammern in dem zumindest einen rotierenden Freilegedorn, führbar ist. Diese orientierte Führung der Freilegemasse entlang beispielsweise einer Zylinderbohrung dient der Vermeidung einer sogenannten Schattenbildung, welche zu ungleichmäßigem Abtrag von Material um die freizulegenden Si-Kristalle des Werkstückmaterials führen würde, und somit zu einer Verschlechterung der Oberflächenbeschaffenheit des freigelegten Materials.

Besonders bevorzugt weist die erfindungsgemäße Vorrichtung ein magaziniertes Zufuhrsystem auf, wobei die Freilegemasse in Tablettenform in der zumindest einen Vorratskammer aufnehmbar ist, und/oder die verbrauchte Freilegemasse durch ein automatisiertes Auswerfersystem auswerfbar ist. Eine besonders verbesserte Einsetzbarkeit einer dermaßen ausgestatteten erfindungsgemäßen Freilegevorrichtung insbesondere unter Großserienbedingungen ist somit möglich.

Es sei angemerkt, dass mehrere Freilegemassen, welche in unterschiedlichen Vorratskammern bevorratet sein können, in der erfindungsgemäßen Vorrichtung verwendbar sind, wobei dann auch verschiedene steuerbare elastische Flachschieber, verschiedene bzw. mehrere schraubenlinienförmige Drallstufen und gegebenenfalls mehrere verschiedene Zufuhrleitungen in dem erfindungsgemäß vorgesehenen Kreislaufsystem für die jeweils unterschiedlichen Freilegemassen vorgesehen sein können. Auch mehrere rotierende Freilegedorne können für die verschiedenen Freilegemassen vorgesehen sein. Vorteilhafterweise ist jedoch auch bei Vorsehen mehrerer verwendbarer Freilegemassen in einer entsprechend gestalteten Freilegevorrichtung (siehe oben) gemäß der Erfindung nur ein Auffangbehälter für die rückgeführten verbrauchten unterschiedlichen Freilegemassen vorgesehen, sodass diese Freilegemassen gemeinsamen aufbereitbar bzw. recycelbar sind.

Besonders bevorzugt ist eine weitere Ausführungsform der erfindungsgemäßen Vorrichtung, bei welcher beispielsweise im Falle der Verwendung der Vorrichtung zur Bearbeitung eines Zylinders eine Brille bzw. eine Rohrlupe auf eine Zylinderöffnung aufsetzbar ist, bevor der zumindest eine rotierende Freilegedorn in den Zylinder eingeführt ist. Auf diese Art und Weise findet eine besonders sichere und reproduzierbare Zentrierung der Vorrichtung statt, was die Prozesssicherheit insbesondere unter Großserienbedingungen ohne großen Aufwand weiter verbessern kann.

Bevorzugt ist mit der erfindungsgemäßen Vorrichtung bei Aluminium als abzutragendem Material ein Abtragsvolumen von zumindest 0,1 cm³ und bei einer Freilegung bei einer Freilegetiefe im Bereich von 0,15 µm bis 0,8 µm ein Abtragsvolumen mit ca. 0,01 cm³ pro Zylinderbohrung erzielbar.

Besonders bevorzugt ist eine Ausführungsform der vorliegenden Erfindung, bei welcher das Verhältnis von einem Aufnahmevolumen der Freilegemasse in zumindest einem rotierenden Freilegedorn zu einem Abtragsvolumen von freizulegendem Material im Bereich von 1 : 20 bis 1 : 100 beträgt, bevorzugt ein Verhältnis von 1 : 50.

Weiter ist eine Ausführungsform der erfindungsgemäßen Vorrichtung besonders bevorzugt, bei welcher in Bewegungsrichtung des zumindest einen rotierenden Freilegedorns eine davor angeordnete Trennmembran zur Abdichtung des zu bearbeitenden Werkstücks gegen überströmende Freilegemasse vorgesehen ist, wobei diese überströmende Freilegemasse dann aus dem entsprechenden Bereich der Trennmembran rückführbar, insbesondere in den Auffangbehälter rückführbar, ist.

Um die Zähigkeit der Freilegemasse an unterschiedliche Verfahrensbedingungen bzw. unterschiedliche abzutragende Materialien beim Freilegevorgang anzupassen und um die Abtragsleistung der erfindungsgemäßen Vorrichtung zu erhöhen, kann die erfindungsgemäße Vorrichtung gemäß einer bevorzugten Ausführungsform als Ganzes oder bevorzugt zumindest partiell in Mikroschwingungen versetzt werden. Das heißt, der erfindungsgemäßen Vorrichtung kann gemäß einer bevorzugten Ausführungsform zumindest partiell gestufte Rüttelbewegung überlagert werden. Als Vorrichtungen, welche die Rüttelbewegung aufprägen, können beispielsweise an sich bekannte Exzentervorrichtungen Verwendung finden, welche aus Gründen der Einfachheit hier nicht näher beschrieben werden.

Um die Recycelbarkeit der erfindungsgemäßen Freilegemasse auf besonders einfache Weise zu gewährleisten und um die im Zusammenhang mit dem erfindungsgemäßen Verfahren beschriebenen Recyclingschritte durchzuführen, weist die erfindungsgemäße Freilegevorrichtung gemäß einer bevorzugten Ausführungsform weiter eine Aufschwemmeinrichtung, eine Abscheide-Einrichtung und eine Siebeinrichtung auf.

Gemäß den obigen Ausführungen bietet die vorliegende Erfindung eine gegenüber dem Stand der Technik verbesserte Freilegemasse, ein verbessertes Freilegeverfahren sowie eine verbesserte Freilegevorrichtung.

## Patentansprüche

1. Freilegemasse, insbesondere zur Freilegung von Zylinderlaufbahnen aus Material mit ausgeprägten Si-Primärkristallen, aufweisend:
eine zäh-elastische Kunststoffträgermasse und ein Freilegematerial, welches in die zäh-elastische Kunststoffträgermasse eingebettet ist,
**dadurch gekennzeichnet,**
**dass** die Freilegemasse organische Beimengungen aus Zellulose, bevorzugt aus Holz- und/oder Sisalfasern, mit bis zu 60 vol.% der Freilegemasse enthält.

2. Freilegemasse nach Anspruch 1,
**dadurch gekennzeichnet,**
**dass** das Freilegematerial aus Siliziumkarbidkörnern mit einer Korngröße im Bereich von 4 µm bis 0,1 µm besteht.

3. Freilegemasse nach Anspruch 1,
**dadurch gekennzeichnet,**
**dass** das Freilegematerial aus Keramikfasern besteht.

4. Freilegemasse nach Anspruch 3,
**dadurch gekennzeichnet,**
**dass** die Keramikfasern aus Al₂O₃ bestehen.

5. Freilegemasse nach einem der Ansprüche 1 bis 4,
**dadurch gekennzeichnet,**
**dass** das Freilegematerial aus Siliziumkarbidkörnern und aus Keramikfasern besteht.

6. Freilegemasse nach einem der Ansprüche 1 bis 5,
**dadurch gekennzeichnet,**
**dass** die Freilegemasse organische Binder mit bis zu 40 vol.% der Freilegemasse enthält.

7. Freilegemasse nach einem der Ansprüche 1 bis 6,
**dadurch gekennzeichnet,**
**dass** die Freilegemasse Beimengungen von Stärke-Mehlen mit bis zu 20 vol.% der Freilegemasse enthält.

8. Freilegemasse nach einem der Ansprüche 1 bis 7,
**dadurch gekennzeichnet,**
**dass** die Freilegemasse Beimengungen von natürlichen tierischen und/oder pflanzlichen Fetten mit bis zu 40 vol.% der Freilegemasse enthält.

9. Freilegemasse nach einem der Ansprüche 1 bis 8,
**dadurch gekennzeichnet,**
**dass** die Freilegemasse Beimengungen von Harzen mit bis zu 20 vol.% der Freilegemasse enthält.

10. Verfahren zur Oberflächenbearbeitung eines Werkstücks, insbesondere zur Freilegung von Zylinderlaufbahnen aus Material mit ausgeprägten Si-Primärkristallen, unter Verwendung von Freilegemasse, welche eine zäh-elastische Kunststoffträgermasse und ein Freilegematerial, welches in die zäh-elastische Kunststoffträgermasse eingebettet ist, aufweist,
**dadurch gekennzeichnet,**
**dass** es die folgenden Schritte umfasst:
grobes Schruppen des Werkstücks,
Feindrehen des Werkstücks,
Freilegen unter Verwendung einer Freilegemasse nach einem der Ansprüche 1 bis 9.

11. Verfahren nach Anspruch 10,
**dadurch gekennzeichnet,**
**dass** der Schritt des Freilegens in zumindest zwei oder mehrere Freilegeschritte mit Verwendung unterschiedlicher Freilegemassen unterteilt ist.

12. Verfahren nach Anspruch 10 oder 11,
**dadurch gekennzeichnet,**
**dass** ein Recyclingschritt vorgesehen ist, wobei nach Durchführung des Freilegens durch wässerige Aufbereitung der verbrauchten Freilegemasse(n) durch Zusatz von Natronlauge dazu und durch Abscheidung und Siebung eine Trennung der Bestandteile der Freilegemasse(n), bevorzugt die Trennung von Zellulosebestandteilen, Fetten und leichten schwimmenden Bestandteilen und des schwereren Freilegematerials, erfolgt.

13. Vorrichtung zur Oberflächenbearbeitung, insbesondere zur Freilegung von Zylinderlaufbahnen aus Material mit ausgeprägten Si-Primärkristallen, zur Durchführung eines Verfahrens nach einem der Ansprüche 10 bis 12,
wobei die Vorrichtung aufweist:
Freilegemasse nach einem der Ansprüche 1 bis 9,
eine Spindel,
zumindest einen rotierenden Freilegedorn,
zumindest eine Vorratskammer zur Aufnahme von Freilegemasse,
steuerbare elastische Flachschieber, welche an die Kontur des zu bearbeitenden Werkstücks anpassbar sind,
zumindest eine schraubenlinienförmige Drallstufe zur Zufuhr der Freilegemasse,
ein Kreislaufsystem mit einer Pumpeneinheit zur Förderung der Freilegemasse aus der zumindest einen Vorratskammer in den zumindest einen rotierenden Freilegedorn, und mit zumindest einem Rückführkanal in dem zumindest einen Freilegedorn für die Rückführung einer verbrauchten Freilegemasse, und mit zumindest einem Auffangbehälter für die rückgeführte verbrauchte Freilegemasse.

14. Vorrichtung nach Anspruch 13,
**dadurch gekennzeichnet,**
**dass** die Vorrichtung einen Hohlzylinder aufweist, welcher in das Kreislaufsystem integriert ist, und der so steuerbar ist, dass er die Freilegemasse, welche sich zwischen dem Hohlzylinder und der freizulegenden Oberfläche eines zu bearbeitenden Werkstücks befindet, mit einem steuerbaren Vorspanndruck auf die freizulegende Oberfläche des zu bearbeitenden Werkstücks, insbesondere die Innenwand eines Zylinders, drückt, wobei der Hohlzylinder zumindest einen weiteren Rückführkanal zur Rückführung der verbrauchten Freilegemasse aufweist.

15. Vorrichtung nach Anspruch 13 oder 14,
**dadurch gekennzeichnet,**
**dass** die Freilegemasse entlang einer vorgegebenen Bearbeitungsrichtung des Werkstücks, insbesondere entlang der Längsrichtung einer Zylinderbohrung eines zu bearbeitenden Zylinders, bevorzugt durch Kammern in dem zumindest einen rotierenden Freilegedorn, führbar ist.

16. Vorrichtung nach einem der Ansprüche 13 bis 15,
**dadurch gekennzeichnet,**
**dass** die Vorrichtung ein magaziniertes Zufuhrsystem aufweist, wobei die Freilegemasse in Tablettenform in der zumindest eine Vorratskammer aufnehmbar ist, und/oder die verbrauchte Freilegemasse durch ein automatisiertes Auswerfersystem auswerfbar ist.

17. Vorrichtung nach einem der Ansprüche 13 bis 16,
**dadurch gekennzeichnet,**
**dass** im Falle der Verwendung der Vorrichtung zur Bearbeitung eines Zylinders eine Brille auf eine Zylinderöffnung aufsetzbar ist, bevor der zumindest eine rotierenden Freilegedorn in den Zylinder eingeführt ist.

18. Vorrichtung nach einem der Ansprüche 13 bis 17,
**dadurch gekennzeichnet,**
**dass** damit bei Aluminium als abzutragendem Material ein Abtragsvolumen von zumindest 0,1 cm³ bei einer Freilegetiefe im Bereich von 0,15 µm bis 0,8 µm erzielbar ist.

19. Vorrichtung nach einem der Ansprüche 13 bis 18,
**dadurch gekennzeichnet,**
**dass** die Vorrichtung ein Verhältnis von einem Aufnahmevolumen der Freilegemasse im zumindest einen rotierenden Freilegedorn zu einem Abtragsvolumen von freizulegendem Material im Bereich von 1:20 bis 1:100 aufweist, bevorzugt von 1:50.

20. Vorrichtung nach einem der Ansprüche 13 bis 19,
**dadurch gekennzeichnet,**
**dass** in Bewegungsrichtung des zumindest einen rotierenden Freilegedorns eine davor angeordnete Trennmembran zur Abdichtung des Werkstücks gegen überströmende Freilegemasse vorgesehen ist, wobei diese überströmende Freilegemasse rückführbar ist.

21. Vorrichtung nach einem der Ansprüche 13 bis 20,
**dadurch gekennzeichnet,**
**dass** die Vorrichtung zumindest partiell in Mikroschwingungen versetzbar ist.

22. Vorrichtung nach einem der Ansprüche 13 bis 21,
**dadurch gekennzeichnet,**
**dass** die Vorrichtung weiter eine Aufschwemmeinrichtung,
eine Abscheide-Einrichtung und eine Siebeinrichtung zum Recycling der Freilegemasse aufweist.

## Claims

1. Uncovering compound, in particular for uncovering cylinder bearing surfaces made from material with pronounced Si primary crystals, including:
a visco-elastic plastic carrier compound and an uncovering material which is embedded in the visco-elastic plastic carrier compound,
**characterized in that** the uncovering compound contains organic admixtures of cellulose, preferably of wood and/or sisal fibers, forming up to 60% by volume of the uncovering compound.

2. Uncovering compound according to Claim 1, **characterized in that** the uncovering material consists of silicon carbide grains with a grain size in the range from 4 µm to 0.1 µm.

3. The uncovering compound according to Claim 1, **characterized in that** the uncovering material consists of ceramic fibers.

4. Uncovering compound according to Claim 3, **characterized in that** the ceramic fibers consist of Al₂O₃.

5. Uncovering compound according to one of Claims 1 to 4, **characterized in that** the uncovering material consists of silicon carbide grains and ceramic fibers.

6. Uncovering compound according to one of Claims 1 to 5, **characterized in that** the uncovering compound contains organic binders forming up to 40% by volume of the uncovering compound.

7. Uncovering compound according to one of Claims 1 to 6, **characterized in that** the uncovering compound contains admixtures of starch flours forming up to 20% by volume of the uncovering compound.

8. Uncovering compound according to one of Claims 1 to 7, **characterized in that** the uncovering compound contains admixtures of natural animal and/or vegetable fats forming up to 40% by volume of the uncovering compound.

9. Uncovering compound according to one of Claims 1 to 8, **characterized in that** the uncovering compound contains admixtures of resins forming up to 20% by volume of the uncovering compound.

10. Process for surface-machining a workpiece, in particular for uncovering cylinder bearing surfaces made from material with pronounced Si primary crystals, using uncovering compound which includes a visco-elastic plastic carrier compound, and an uncovering material that is embedded in the visco-elastic plastic carrier compound, **characterized in that** it comprises the following steps:
roughing of the workpiece,
precision-turning of the workpiece,
uncovering using an uncovering compound according to at least one of Claims 1 to 9.

11. Process according to Claim 10, **characterized in that** the uncovering step is divided into at least two or more uncovering steps using different uncovering compounds.

12. Process according to Claim 10 or 11, **characterized in that** a recycling step is provided, in which case, after the uncovering has been carried out, the constituents of the uncovering compound(s) are separated, preferably cellulose constituents, fats and lightweight floating constituents and the heavier uncovering material are separated, by aqueous treatment of the used uncovering compound(s) by adding sodium hydroxide solution thereto and by settling and screening.

13. Apparatus for surface-machining, in particular for uncovering cylinder bearing surfaces made from material with pronounced Si primary crystals, for carrying out the process according to one of Claims 10 to 12, the apparatus including:
uncovering compound according to one of claims 1 to 9,
a spindle,
at least one rotating uncovering mandrel,
at least one storage chamber for holding uncovering compound,
controllable elastic flat slides which can be matched to the contour of the workpiece to be machined,
at least one helical swirl stage for supplying the uncovering compound,
a circulation system having a pump unit for delivering the uncovering compound from the at least one storage chamber into the at least one rotating uncovering mandrel, and having at least one return passage in the at least one uncovering mandrel for returning a used uncovering compound, and having at least one collection vessel for collecting the returned used uncovering compound.

14. Apparatus according to Claim 13, **characterized in that** the apparatus includes a hollow cylinder which is integrated in the circulation system and can be controlled in such a way that it presses the uncovering compound, which is located between the hollow cylinder and that surface of a workpiece to be machined which is to be uncovered, onto that surface of the workpiece to be machined which is to be uncovered, in particular the inner wall of a cylinder, with a controllable prestressing pressure, the hollow cylinder having at least one further return passage for returning the used uncovering compound.

15. Apparatus according to Claim 13 or 14, **characterized in that** the uncovering compound can be guided along a predetermined machining direction for the workpiece, in particular along the longitudinal direction of a cylinder bore of a cylinder to be machined, preferably through chambers in the at least one rotating uncovering mandrel.

16. Apparatus according to one of Claims 13 to 15, **characterized in that** the apparatus includes a magazine feed system, it being possible for the uncovering compound to be held in tablet form in the at least one storage chamber and/or for the used uncovering compound to be ejected by an automated ejector system.

17. Apparatus according to one of Claims 13 to 16, **characterized in that**, if the apparatus is used to machine a cylinder, a center rest can be placed onto a cylinder opening before the at least one rotating uncovering mandrel is introduced into the cylinder.

18. Apparatus according to one of Claims 13 to 17, **characterized in that**, if the material to be removed is aluminum, it can be used to achieve a material-removal volume of at least 0.1 cm³ for an uncovering depth in the range from 0.15 µm to 0.8 µm.

19. Apparatus according to one of Claims 13 to 18, **characterized in that** the apparatus has a ratio of a holding volume for the uncovering compound in the at least one rotating uncovering mandrel to a material-removal volume of material to be uncovered in the range from 1:20 to 1:100, preferably of 1:50.

20. Apparatus according to one of Claims 13 to 19, **characterized in that**, as seen in the direction of movement of the at least one rotating uncovering mandrel, there is a separating membrane arranged in front of the uncovering mandrel for sealing off the workpiece from overflowing uncovering compound, it being possible for this overflowing uncovering compound to be returned.

21. Apparatus according to one of Claims 13 to 20, **characterized in that** the apparatus can at least partially be set in micro-oscillation.

22. Apparatus according to one of Claims 13 to 21, **characterized in that** the apparatus also includes a float device, a settling device and a screening device for recycling the uncovering compound.

## Revendications

1. Masse de dégarnissage, notamment pour dégarnir des fûts de cylindre, en matériau avec des cristaux primaires étendus de Si, comportant
une masse support en matière viscoplastique et une matière de dégarnissage, qui est incorporée dans la masse support en matière viscoplastique
**caractérisée en ce que** la masse de dégarnissage contient des additifs organiques de cellulose, de préférence en fibres de bois et/ou de sisal, à raison de jusqu'à 60 % en volume de la masse de dégarnissage.

2. Masse de dégarnissage selon la revendication 1,
**caractérisée en ce que** la matière de dégarnissage consiste en des grains de carbure de silicium avec une grosseur de grains dans la fourchette de 4 µm à 0,1 µm.

3. Masse de dégarnissage selon la revendication 1,
**caractérisée en ce que** la matière de dégarnissage consiste en des fibres céramiques.

4. Masse de dégarnissage selon la revendication 3,
**caractérisée en ce que** les fibres céramiques sont en Al₂O₃.

5. Masse de dégarnissage selon l'une quelconque des revendications 1 à 4,
**caractérisée en ce que** la matière de dégarnissage consiste en des grains de carbure de silicium et en des fibres céramiques.

6. Masse de dégarnissage selon l'une quelconque des revendications 1 à 5,
**caractérisée en ce que** la masse de dégarnissage contient des liants organiques à raison de jusqu'à 40% en volume de la masse de dégarnissage.

7. Masse de dégarnissage selon l'une quelconque des revendications 1 à 6,
**caractérisée en ce que** la masse de dégarnissage contient des additifs d'amidons, à raison de jusqu'à 20 % en volume de la masse de dégarnissage.

8. Masse de dégarnissage selon l'une quelconque des revendications 1 à 7,
**caractérisée en ce que** la masse de dégarnissage contient des additifs de graisses naturelles animales et/ou végétales, à raison de jusqu'à 40 % en volume de la masse de dégarnissage.

9. Masse de dégarnissage selon l'une quelconque des revendications 1 à 8,
**caractérisée en ce que** la masse de dégarnissage contient des additifs de résine, à raison de jusqu'à 20 % en volume de la masse de dégarnissage.

10. Procédé pour le traitement de surface d'une pièce à usiner, notamment pour dégarnir des fûts de cylindre en matériau avec des cristaux primaires étendus de Si, en utilisant une masse de dégarnissage qui est une masse support de matière viscoplastique et qui comporte une matière de dégarnissage qui est incorporée dans la masse support viscoélastique,
**caractérisé en ce qu'**il comprend les étapes suivantes :
- écaillage grossier de la pièce à usiner
- tournage de précision de la pièce à usiner,
- dégarnissage, en utilisant une masse de dégarnissage selon l'une quelconque des revendications 1 à 9.

11. Procédé selon la revendication 10,
**caractérisé en ce que** l'étape de dégarnissage est divisée en au moins deux ou plusieurs étapes de dégarnissage, utilisant différentes masses de dégarnissage.

12. Procédé selon la revendication 10 ou 11,
**caractérisé en ce qu'**on a prévu une étape de recyclage, après réalisation du dégarnissage par préparation à l'eau de la (des) masse(s) de dégarnissage utilisée(s), par ajout de soude caustique et par séparation et tamisage, on procède à une séparation des éléments de la (des) masse(s) de dégarnissage, de préférence à la séparation des éléments en cellulose, des graisses et des éléments légers flottants et de la matière de dégarnissage lourde.

13. Dispositif pour le traitement de surfaces, notamment pour le dégarnissage de fûts de cylindres en matériau avec des cristaux primaires étendus de Si, pour la réalisation d'un procédé selon l'une quelconque des revendications 10 à 12,
le dispositif comportant :
- une masse de dégarnissage selon l'une quelconque des revendications 1 à 9,
- une broche,
- au moins un mandrin de dégarnissage rotatif,
- au moins un compartiment de réserve pour recueillir de la masse de dégarnissage,
- des tiroirs plats élastiques pilotables, que l'on peut adapter au contour de la pièce à usiner,
- au moins un étage de torsion hélicoïdal pour alimenter la masse de dégarnissage,
- un système de circuit, avec une unité de pompage pour transporter la masse de dégarnissage hors du au moins un compartiment de réserve dans le au moins un mandrin de dégarnissage rotatif et avec au moins un conduit de retour dans le au moins un mandrin de dégarnissage rotatif, pour ramener une masse de dégarnissage utilisée et avec au moins un récipient collecteur pour la masse de dégarnissage utilisée ramenée.

14. Dispositif selon la revendication 13,
**caractérisé en ce que** le dispositif comporte un cylindre creux qui est intégré dans le système de circuit et qui est pilotable de façon telle, qu'il presse la masse de dégarnissage, qui se trouve entre le cylindre creux et la surface à dégarnir d'une pièce à usiner avec une pression de précontrainte pilotable sur la surface à dégarnir de la pièce à usiner, notamment la paroi intérieure d'un cylindre, le cylindre creux comportant au moins un conduit de retour supplémentaire, pour ramener la masse de dégarnissage utilisée.

15. Dispositif selon la revendication 13 ou 14,
**caractérisé en ce que** la masse de dégarnissage peut être guidée le long d'une direction de traitement prédéfinie de la pièce à usiner, notamment le long de la direction longitudinale d'un alésage de cylindre d'un cylindre à usiner, de préférence à travers des compartiments dans le au moins un mandrin de dégarnissage rotatif.

16. Dispositif selon l'une quelconque des revendications 13 à 15, **caractérisé en ce que** le dispositif comporte un système de guidage à magasins, la masse de dégarnissage pouvant être prélevée sous forme de tablettes dans le au moins un compartiment de réserve et/ou la masse de dégarnissage utilisée pouvant être éjectée par un système d'éjection automatisé.

17. Dispositif selon l'une quelconque des revendications 13 à 16, **caractérisé en ce qu'**en cas d'utilisation du dispositif pour le traitement d'un cylindre, on peut monter une lunette sur l'orifice du cylindre, avant d'introduire le au moins un mandrin de dégarnissage rotatif dans le cylindre.

18. Dispositif selon l'une quelconque des revendications 13 à 17, **caractérisé en ce que** si la matière à enlever est de l'aluminium, il permet d'atteindre un volume d'enlèvement d'au moins 0,1 cm³, pour une profondeur de dégarnissage dans la fourchette de 0,15 µm à 0,8 µm.

19. Dispositif selon l'une quelconque des revendications 13 à 18, **caractérisé en ce que** le dispositif présente un rapport situé dans la fourchette de 1 : 20 à 1 : 100, de préférence de 1 : 50 d'un volume d'absorption de la masse de dégarnissage dans au moins un mandrin de dégarnissage rotatif à un volume d'enlèvement de matière à dégarnir.

20. Dispositif selon l'une quelconque des revendications 13 à 19, **caractérisé en ce que** dans le sens de déplacement du au moins un mandrin de dégarnissage rotatif, on a prévu une membrane de séparation disposée devant ce dernier pour assurer l'étanchéité de la pièce à usiner par rapport à de la masse de dégarnissage débordante, cette masse débordante pouvant être ramenée.

21. Dispositif selon l'une quelconque des revendications 13 à 20, **caractérisé en ce que** le dispositif peut être amené au moins partiellement en micro-vibrations.

22. Dispositif selon l'une quelconque des revendications 13 à 21, **caractérisé en ce que** le dispositif comporte par ailleurs un dispositif de mise en suspension, un dispositif séparateur et un dispositif tamiseur pour le recyclage de la masse de dégarnissage.
